# EUROPEAN PATENT SPECIFICATION

(11) **EP 0 691 934 B1**
(45) Date of publication and mention of the grant of the patent: **26.01.2000**
(21) Application number: 94907577.4
(22) Date of filing: 22.02.1994
(51) Int. Cl.: C01B 33/32, C04B 12/04, C09D 1/02

(54) **POWDERY PRODUCT COMPRISING FINELY DIVIDED ALKALI SILICATE AND PROCESS FOR PRODUCING THE SAME**
PULVRIGES, FEINTEILIGES, ALKALIMETALLSILIKATHALTIGES PRODUKT UND VERFAHREN ZU SEINER HERSTELLUNG
PRODUIT PULVERULENT CONTENANT DU SILICATE ALCALIN FINEMENT FRACTIONNE ET PROCEDE D'OBTENTION

(30) Priority: 22.02.1993 FI 930771; 10.02.1994 FI 940620
(43) Date of publication of application: 17.01.1996
(73) Proprietor: VALORANTA, Pentti, SF-00630 Helsinki (FI)
(72) Inventor: VALORANTA, Pentti, SF-00630 Helsinki (FI)
(74) Representative: Laitinen, Pauli Sakari
(86) International application number: FI9400068
(87) International publication number: WO9419279

(56) References cited:
- GB-A- 1 343 460
- GB-A- 2 099 412
- PATENT ABSTRACTS OF JAPAN, Vol. 10, No. 139, C-348; & JP,A,60 264 321 (NIPPON KAGAKU KOGYO K.K.), 27 December 1985 (27.12.85).

## Description

The present invention relates to a process for producing a storage-stable, finely-powdered product comprising finely powdered alkali silicate.

Alkali silicates, such as water-glass Na₂O·nSiO₂ and potassic water-glass K₂O·nSiO₂ in which n = 3-4, are used e.g. in mortars, cements and paints as a reinforcing ingredient and for providing waterproofing. According to the technology known in the art, the alkali silicates have been brought into finely powdered form by through-drying of the silicate solution. Such through-drying is described, inter alia, in GB application publication No. 2 086 402 and in publication FI-426 578.

A problem of through-dried alkali silicate has been the relatively slow dissolution in water. It may even take about twenty-four hours before silicate particles are completely dissolved, which in practice means that said particles cannot be included as ingredients in dry powderized mortar, cement or paint. For that reason, silicates have been used in ready-made solutions to be mixed on site with other, solid ingredients of a hardening mixture. The slowness of the dissolution of the through-dried silicate becomes obvious in the table on page 3 in GB patent application No. 2 086 402, according to which the increase of viscosity brought about by gel-formation following the dissolution was very insignificant in the first five minutes and more visible in half an hour, but the final stage was not reached until about twenty-four hours later. According to the publication, a gelforming agent was used as an aid, such as sodium silicone fluoride. According to examples 5 and 6 of the Finnish publication No. 426 578, in a product containing through-dried sodium silicate powder the gel-formation took place within about quarter of an hour or 1 hour.

The objective of the present invention is to provide a solution for transforming alkali silicate into powdered form in which it is dissolved in water substantially more rapidly than the current through-dried silicates, whereby it can be included as an ingredient in a powder-like product to be hardened, such as mortar or paint, without having to resort to an additive to accelerate solubility or gelformation. The production method of a powdered product containing alkali silicate according to the invention is characterized by the characterizing features of claim 1.

In contrast to blow-dried silicate powder, the silicate powder produced by mechanical grinding as taught by the present invention is rapidly water-soluble. According to the experiments, the powder is completely dissolved in cold water in about 2 or 3 minutes without any need for an additive to advance the dissolution. The silicate content of the solution thus obtained can be about 40 per cent by weight, although a concentration of about 1 to 5 per cent by weight is in general adequate in practical applications.

The alkali slicate powder produced by mechanical grinding, externally resembling, at its finest, wheat or potato flour (average particle size below 1 µm), is characterized by hygroscopy, because of which and owing to the moisture in the air it starts to cake and finally becomes similar to the glassy mass wherefrom the powder was made. In order to prevent said process from happening, according to the present invention a finely-powdered stabilizer is added to the alkali silicate powder to keep the powder running and thus appropriate for storing. A mixture of silicate powder and stabilizer according to the present invention can be mixed into an ingredient of a dry, finely ground mortar, cement or paint, whereby only water needs be added on site to provide a mass ready for use. The dissolution of the silicate powder and gel formation is shown by the immediate commencement of precipitation of the mass.

The mortar, cement or paint produced according to the present invention is characterized by relatively rapid solidification after addition of water. Particularly in paints said property inhibits harmful running on vertical surfaces.

A solid, glassy silicate mass, ground according to the invention, can be prepared e.g. by drying from silicate in solution form, said silicates being commercially available. The grinding can be carried out e.g. between grinding stones or by any other grinding method of mineral matter known in the art.

The quality of finely-powdered stabilizer added, according to the present invention, to alkali silicate powder may vary, as based on the initial tests. The essential feature is that the stabilizer in itself is not hygroscopic and that it keeps the ground silicate particles sufficiently apart from one another to prevent them from adhering to each other. Hollow glass pearls not soluble in water and made from aluminium silicates have proved to be highly useful for said purpose, their particle size being about 50 to 300 micrometers. One such product is e.g. Enlett 300 marketed by Nordiska Mineralprodukter Ab, the maximum particle size thereof being 300 µm, average particle size 75 µm, density 0.20 g/cm³, and being capable of absorbing moisture of 0.4 per cent by weight. Such stabilizer can be mixed in alkali silicate at an amount of about 40 to 55 per cent by weight. An appropriate mixing ratio has been found to be 50 per cent by weight of the stabilizer and 50 per cent by weight of the alkali silicate. The aluminium silicate stabilizer is insoluble in water, but it keeps the alkali silicate particles dry and running, and after adding water, rapidly water-soluble.

Another stabilizer found to be efficient is a very finely powdered quartz powder with less than 0.1 µm particle size, most preferably about 2 to 40 nm particular size. The effect of said stabilizer particles is assumed to be based on the fact that they form a protective skin around alkali silicate particles of substantially greater size, so preventing them from absorbing moisture and adhering to each other. Less of a stabilizer acting in said manner is needed; about 3 to 10 per cent by weight, preferably about 5 per cent by weight of the quantity of the alkali silicate. As an example of approriate finely-powdered quartz powders can be mentioned Aerosil products marketed by Degussa AG, a variety of which are commercially available, both hydrophobic and hydrophilic, but all of which are mainly silicon dioxide, with an average particle size in the range 7 to 40 nm. As regards the present invention, particularly the hydrophilic types, such as Aerosil 200, are preferred.

In a product according to the present invention, stabilizers of several different types may also be included simultaneously. It is possible, for instance, to prepare waterglass particles by grinding mechanically, in to which aluminium silicate pearls (Enlett) and highly finely powdered quartz powder (Aerosil) are added, their particle size being of the same order of magnitude. The composition of the mixture may in such case be as follows: 45% alkali silicate, 50% Enlett 300, and 5% Aerosil 200.

As described above, a product produced according to the present invention, containing alkali silicate, contains solid, mechanically ground water-soluble alkali silicate with particle size of below 100 µm, preferredly 0.1 to 10 µm, and finely powdered, non-hygroscopic stabilizer which is mixed for preventing it from caking. As regards various embodiments of the product, reference is made to what is described above and to the accompanying claims.

### Example 1

An aqueous solution of sodium silicate was dried into solid, glassy waterglass, which was subjected to mechanical grinding into below 100 µm particle size. The waterglass powder thus obtained was mixed into 5 per cent by weight of commercially available, powder-like Portland dry cement. 40% water, relative to the amount of the cement, was added in the mixture so that it became loose, running gruel. One minute after the addition of the water, thickening of the mixture could be observed with the naked eye, in two minutes it had become porridge-like, and in 5 minutes, thick putty. The test proved the rapid dissolution capability of the mechanically ground waterglass, and the gel-formation thereafter.

### Example 2

The procedure was as in Example 1, but instead of waterglass potassic waterglass, which was potassic silicate, was used. The result of the test was the same as in Example 1, i.e. in about 5 minutes the mixture of mechanically ground potassic waterglass and water had become thick putty.

### Example 3 (reference example)

In dry cement, being the same as in Example 1, 5 per cent by weight of through-dried silicate powder Portil N produced by Ahlsell Mineral AB, which is chemically waterglass Na₂O . 3.3 SiO₂. Water was added in the mixture in the way of Example 1, that is, so that loose, running gruel was obtained. No visible change could be discerned in the viscosity of the gruel in half an hour.

The test was repeated using through-dried silicate powder Portil A of Ahlsell Mineral AB which contained more sodium compared with silica. The result of the test was precisely the same; no change in viscosity could be observed in half an hour.

### Example 4

50 per cent by weight of waterglass powder ground as in Example 1 and 50 per cent by weight of product Enlett 300, hollow aluminium silicate pearls with 75 µm average particle size, were mixed. This resulted in a running, powder-like product. The product was stored in ordinary room air for 6 months. After the storage, 5 per cent by weight of the product, which had remained as a running powder, was mixed with cold water. In less than 2 minutes the waterglass had dissolved completely and the aluminium silicate had been separated as a nonsoluble ingredient on the water surface.

It is obvious to a person skilled in the art that various embodiments of the invention are not limited to the examples presented above, and they may be varied within the scope of the accompanying claims.

## Claims

1. A process for producing a storage-stable product comprising finely-powdered alkali silicate, **characterized by** turning an alkali silicate in solution form into a solid, glassy silicate mass by drying; mechanically grinding the so formed solid glassy silicate mass into a powder with less than 100 µm particle size, the powder being soluble in water in less than 5 minutes and mixing a finely-powdered, non-hygroscopic stabilizer with the powder for preventing caking of the product.

2. Process according to claim 1, **characterized in that** the alkali silicate is waterglass or potassic waterglass, or a mixture thereof.

3. Process according to claim 1 or 2, **characterized in that** the stabilizer consists of hollow glass pearls insoluble in water and with a particle size of about 50 to 300 µm.

4. Process according to claim 3, **characterized in that** said pearls are made from aluminium silicate and the mixing ratio of alkali silicate and aluminium silicate is 45 to 60 per cent by weight, preferably about 50 per cent by weight, of alkali silicate, and 40 to 55 per cent by weight, preferably about 50 per cent by weight, of aluminium silicate.

5. Process according to claim 1 or 2, **characterized in that** the stabilizer is quartz powder with a particle size below 0,1 µm, preferably about 2 to 40 nm.

6. Process according to claim 5, **characterized in that** the amount of quartz is 3 to 10 per cent by weight, preferably about 5 per cent by weight, of the alkali silicate amount.

7. Process according to any one of the preceding claims, **characterized in that** a mixture of alkali silicate and stabilizer is included in mortar, cement or paint as an ingredient thereof.

## Patentansprüche

1. Verfahren zur Herstellung eines lagerstabilen Produkts, das ein feinpulvriges Alkalisilicat umfaßt, dadurch gekennzeichnet, daß ein Alkalisilicat in Form einer Lösung durch Trocknung in eine feste glasartige Silicat-Masse überführt wird; die so gebildete feste glasartige Silicat-Masse durch mechanisches Mahlen zu einem Pulver mit einer Teilchengröße von weniger als 100 µm vermahlen wird, wobei das Pulver in Wasser in weniger als 5 Minuten löslich ist, und ein feinpulvriger, nicht-hygroskopischer Stabilisator mit dem Pulver zur Verhinderung des Verbackens des Produkts gemischt wird.

2. Verfahren nach Anspruch 1, dadurch gekennzeichnet, daß das Alkalisilicat Wasserglas oder Kaliwasserglas oder eine Mischung davon ist.

3. Verfahren nach Anspruch 1 oder 2, dadurch gekennzeichnet, daß der Stabilisator aus in Wasser unlöslichen hohlen Glasperlen mit einer Teilchengröße von etwa 50 bis 300 µm besteht.

4. Verfahren nach Anspruch 3, dadurch gekennzeichnet, daß die Perlen aus Aluminiumsilicat sind und das Mischungsverhältnis von Alkalisilicat und Aluminiumsilicat 45 bis 60 Gewichtsprozent, bevorzugt etwa 50 Gewichtsprozent, Alkalisilicat und 40 bis 55 Gewichtsprozent, bevorzugt etwa 50 Gewichtsprozent, Aluminiumsilicat beträgt.

5. Verfahren nach Anspruch 1 oder 2, dadurch gekennzeichnet, daß der Stabilisator Quarzpulver mit einer Teilchengröße unter 0,1 µm, bevorzugt etwa 2 bis 40 nm, ist.

6. Verfahren nach Anspruch 5, dadurch gekennzeichnet, daß die Menge an Quarz 3 bis 10 Gewichtsprozent, bevorzugt etwa 5 Gewichtsprozent, der Alkalisilicat-Menge beträgt.

7. Verfahren nach irgendeinem der vorhergehenden Ansprüche, dadurch gekennzeichnet, daß eine Mischung von Alkalisilicat und Stabilisator einem Mörtel, Zement oder Anstrichmittel als ein Bestandteil davon zugegeben wird.

## Revendications

1. Procédé de production d'un produit stable au stockage, comprenant un silicate alcalin en poudre fine, caractérisé en ce qu'il comprend les étapes consistant à transformer par séchage un silicate alcalin sous la forme d'une solution, en une masse de silicate vitreux, solide; à broyer mécaniquement la masse de silicate vitreux, solide, ainsi formée en une poudre d'une granulométrie inférieure à 100 µm, la poudre étant soluble dans l'eau en moins de 5 minutes, et à mélanger à la poudre un stabilisant en poudre fine, non-hygroscopique, pour empêcher la produit de former des amas.

2. Procédé selon la revendication 1, caractérisé en ce que le silicate alcalin est un verre soluble ou un verre soluble de potasse, ou un mélange de ceux-ci.

3. Procédé selon la revendication 1 ou 2, caractérisé en ce que le stabilisant consiste en perles de verre creuses, insolubles dans l'eau, d'une granulométrie d'environ 50 à 300 µm.

4. Procédé selon la revendication 3, caractérisé en ce que les dites perles sont faites de silicate d'aluminium et le rapport de mélange du silicate alcalin et du silicate d'aluminium est de 45 à 60% en poids, de préférence d'environ 50% en poids de silicate alcalin, et de 40 à 55% en poids, de préférence d'environ 50% en poids, de silicate d'aluminium.

5. Procédé selon la revendication 1 ou 2, caractérisé en ce que le stabilisant est de la poudre de quartz avec une granulométrie inférieure à 0,1 µm, de préférence d'environ 2 à 40 nm.

6. Procédé selon la revendication 5, caractérisé en ce que la quantité de quartz est de 3 à 10% en poids, de préférence d'environ 5% en poids, de la quantité du silicate alcalin.

7. Procédé selon l'une quelconque des revendications précédentes, caractérisé en ce qu'un mélange de silicate alcalin et de stabilisant est inclus dans un mortier, un ciment ou une peinture, en tant que composant de celui-ci.
